Europäisches Patentamt

European Patent Office

Office européen des brevets

(19)

(11) Publication number: **0 450 978 A2**

(12) # EUROPEAN PATENT APPLICATION

(21) Application number: **91303025.0**

(22) Date of filing: **05.04.91**

(51) Int. Cl.⁵: **G06F 15/72**

(30) Priority: **06.04.90 GB 9007915**
**18.06.90 GB 9013583**

(43) Date of publication of application:
**09.10.91 Bulletin 91/41**

(84) Designated Contracting States:
**DE FR GB**

(71) Applicant: **LINK-MILES LIMITED**
**Churchill Industrial Estate**
**Lancing, West Sussex BN15 8UF (GB)**

(72) Inventor: **Loveless, Roger Graham**
**8 Downscroft, Upper Beeding**
**Steyning, West Sussex BN44 3UA (GB)**
Inventor: **Lewis, Mark Christopher**
**7 Carlyle Street**
**Brighton, Sussex BN2 2XU (GB)**

(74) Representative: **Jackson, David Spence et al**
**REDDIE & GROSE 16, Theobalds Road**
**London, WC1X 8PL (GB)**

(54) Apparatus for generating a visual display.

(57)    A computer-generated-image system for a simulator includes a pattern processor (20) in which intensity modulation data stored in tile stores (38) is addressed by inverse perspective transformed coordinates Xe, Ye derived from CRT screen pixel coordinates $X_s$, $Y_s$. Parts of the transformed coordinates Xe, Ye are decoded into address pointers by successive lookup processes at a macro-map store (51) and a tile map store (53). A map number (39) supplied to accompany the display of a polygonal surface selects a respective group of pointers at the macro-map store (51), and corresponding groups of tile numbers at the pattern store (53). Each tile number is used with low significance address bits derived from the Xe, Ye coordinates to provide addresses to individual intensity modulation values in the tile store (38).

EP 0 450 978 A2

FIG.3

This invention relates to apparatus for generating a visual display, and especially to computer generated image apparatus.

Various techniques and apparatus for computer generated images are discussed in "Computer Image Generation", edited by Bruce J. Schachter and published by John Wiley & Sons of New York in 1983, ISBN 0-471-87287-3.

One field in which computer image generation is being used is visual display systems for flight simulation systems. A typical flight simulation system has a replica of a pilot's seat and aircraft controls and instruments mounted on an enclosed platform which is moved to a limited extent to simulate changes in attitude of an aircraft in response to use of the controls by a trainee pilot in the seat and accelerations associated with changes of motion. A visual display is also mounted on the platform and presents the trainee pilot with a simulation of the view to be expected for the simulated flight, such flights being based on real possible journeys or flying conditions. The visual display may be presented by two or three display devices arranged to simulate aircraft windows through which the pilot would see the outside world.

In United Kingdom patent specification GB 2061074, an apparatus is described which is intended to be combined with a polygon-based raster scan image generator and produces a signal for creating a so-called "textured" appearance in a displayed ground plane. A polygon-based raster scan image generator is a known type of computer image generator that, by utilising the simulated aircraft position and attitude data produced by a comuter-controlled flight simulator, calculates the raster display coordinates of the boundaries of polygonal surfaces that are to form the simulated perspective view of territory or cloud being flown over, and controls the intensities of the display pixels so as to produce different assigned intensities, and usually colours, for the different surfaces. The intensity of any particular surface simulated by a polygon-based raster scan image generator acting alone is uniform over that surface, and consequently lacks the visual clues provided in real situations by the surface detail of surfaces. A well known example of the visual clues given by surface detail is the information given by the pattern formed by brick in a brick wall. GB 2061074 describes a surface detail generator which is intended to be used to modulate the intensity signal output by a polygon-based raster scan image generator so as to create perspective transformed views of a single pattern lying in the displayed ground plane only. Also, although GB 2061074 discusses a memory hierarchy of the pattern stored in a plurality of levels of detail and the selection of an appropriate level of detail by using the sample spacing computed in simulated ground distance from the effective sample spacing along a raster line as a measure, GB 2061074 does not provide any technique for avoiding banding effects which can result from the changeovers between successive levels of detail. Furthermore, GB 2061074 does not disclose any means of associating particular surface detail effects with particular surfaces defined by the output of the polygon-based raster scan image generator.

Over the past few years, the most expensive visual systems for full mission simulation have made increasing use of photomapped texture (phototexture) to create high detail and a strong sense of realism. These systems have been expensive because of the large memory storage required to cover geographical area suitable for a practical training exercise.

Medium cost visual systems normally used for flight simulators have made extensive use of small texture patterns or "tiles" that are repeated to represent a surface appearance such as concrete, brick, crops, forest, etc. These systems, designed to meet US Federal Aviation Authority's (FFA) regulations to Phase 3 standards of daylight flight simulation, have been greatly enhanced with tile texturing that provides essential speed cues, but they still lack photographic realism.

Present day medium cost computer generated imagery (CGI) systems are still limited in resolution and scene detail.

A photograph of a real scene contains detail that allows a feature to be recognised by the context of surrounding detail as well as the feature itself, particularly if the real-world scene is familiar to the observer. For example, a runway viewed from a distance may only be discerned by the surrounhding pattern of taxiways and airport layout. The real-world features which are familiar to an observer enable him to judge position and height from the many detailed features depicted in a photograph.

Early CGI visual systems without texturing capability were rated purely by the number of polygonal surfaces that could be rendered on an image plane (TV screen or projection screen section) within one frame-time. Each frame represents one "snapshot" position of a dynamic scene as in a movie film. Typically, a medium cost visual system could produce a few hundred surfaces per image plane in each frame, and was considered adequate for dusk or night time scenes but appeared cartoon-like for daylight simulation. Expensive systems produced a few thousand surfaces per frame and were quite realisitc by comparison, especially if smooth shading techniques were used to give objects a rounded appearance and remove the straight edges in undulating terrain. This removal of edge detail within an object in fact reduced the number of motion cues with a frame and even more faces were required to achieve effective training.

The introduction of simple tiled texturing of horizontal groundplane surfaces substantially increases the position, attitude and motion cues even with the limited capacity of medium cost systems for a relatively small increase in cost.

Tiled texture scenes still require many individual polygonal surfaces to show any change in colour, shade or pattern that occurs naturally in any real-world scene.

True phototexture dramatically reduces the requirement for large numbers of polygonal surfaces in displayed scene. The main requirement for polygon structures is then for terrain shape and detailed objects such as buildings and trees when viewed from low altitude.

In a preferred embodiment of the present invention, to reduce memory yet provide the advantages of phototexture, use is made of the characteristics of real-world continuous areas such as concrete, crops, water, forest, shrub, pastureland, etc., and repetitive features including houses, streets or even scattered villages. Small areas of representative terrain from a photograph can be stored for use as building blocks for a much larger area.

For use in one embodiment of the present invention each photographic pattern is subdivided into a number of square regions called tile areas. These tile areas are then compared visually and all tile areas of a similar type are then replaced by just one tile that is representative of the type. A means is is provided in the embodiment for storing a map defining which tile is used at every point in the photo pattern. A further means is provided for joining together a number of such maps of equal size into a larger map called a macro-map. For very large areas of coherency in a photograph having a macro-map, groups of similar maps are replaced by one map representing the type. A macro-map defines which map of tile areas is used at each point in the area corresponding to the macro-map.

Such a hierarchical structure of tiles, tile maps and macro-maps can be intended to any number of levels in accordance with the invention.

According to the present invention, there is provided apparatus for generating a visual display, comprising first memory means storing geometrical surface data and associated surface appearance date including surface intensity data, first processing means arranged to select from the data stored in the first memory means geometrical surface data and the associated surface appearance data for creating a display of a restricted two-dimensional perspective view of a region defined by observation point and attitude data supplied to the first processing means, the first processing means including input means for receiving variable observation point and attitude data, display means coupled to the first processing means for displaying the said restricted perspective view, second memory means storing surface detail data representing at least one planar pattern, the surface detail data comprising a plurality of intensity modulation values each stored at respective addresses, second processing means coupled to the first processing means to receive observation point and attitude data and to means for generating and supplying thereto pairs of display coordinates corresponding to points in the visual display, the second processing means being such as to generate for each pair of display coordinates supplied thereto a corresponding pair of plane coordinates substantially determined by an inverse perspective projection from the observation point to a plane defined in the coordinate system of the said geometrical surface data, addressing means coupling the second processing means to the second memory means so as to convert each said corresponding pair of plane coordinates into at least one respective address and to address the second memory means therewith, and intensity modulation means so coupling the second memory means to the display means as to cause the intensity data selected by the first processing means for a displayed point to be modulated by an intensity modulation value obtained from the second memory means for the same displayed point, the said addressing means including at least one store coupled to receive pattern data from the first memory means and containing address data for addressing groups of the said surface detail data in predetermined sequences, and being such that each predetermined sequence is enabled by respective pattern data.

In a CGI system embodying the invention in a preferred form, a texture generator unit (TGU) is responsible for modulating a surface intensity value signal in order to produce a so-called 'textured' appearance. The data used to modulate surface intensity may be obtained from a variety of sources. One such source is geographical data from aerial and satellite photographs.

Apparatus for generating a visual display is disclosed in UK patent specification No. 2171579A. A texture generator unit is described in that document which is comprised of two major sub-units. The first of these is an inverse perspective transformation (IPT) processor, which computes ground plane co-ordinates and pixel-footprint information for each pixel, according to the pilot's position and attitude relative to the ground plane. The second sub-unit is a texture data memory with associated mixing hardware, which uses the outputs from the IPT processor to generate a modulation value for each pixel, to be applied to the surface intensity.

As in the UK patent specification No. 2171579 the TGU of a system embodying the invention may consist of two main sub-units: an IPT processor and a texture data memory. The IPT processor of the present TGU system can be of a similar design to that described in GB 2171579. The texture data memory, however, is of a new design, here called a pattern processor, and an example will now be described briefly.

Texture data are stored in a structure having three distinct levels of hierarchy. These are the macro-map, the tile map, and the tile, in descending order of dimension. A macro-map is a two-dimensional array of tile map identifiers. A tile map is a two-dimensional array of tile identifiers. A tile is a two-dimensional array of modulation values (intensities). These three types of array are stored in three separate memory modules, named the macro-map store, the tile map store, and the tile store. The macro-map store holds macro-maps; the tile map store holds tile maps; and the tile store holds tiles.

The multi-level hierarchy makes it possible for a variety of textures to be held, whose dimensions and information content varies over a large range. At the high end of the scale a very large non-compacted photographic image may be stored using all unique tile maps (defined in a macro-map), each of which contains all unique tiles. At the low end of the scale, a very simple image may be stored by using only one tile.

A macro-map is a way of abutting several tile maps to cover a large area without having to define a separate polygonal surface for each tile map. Tile maps of particular types of terrain such as residential and woodland areas can be used repeatedly over the area of a macro-map. A tile map may contain an arbitrary boundary between different terrain types. Such a map and similar maps can be used to build up larger arbitrary shaped areas of each terrain type.

There can be many different techniques used to generate tile maps. Two techniques can be categorised as photomapping and hand crafting.

Each individual tile map defines an assembly of tiles of texture elements. A tile is the basic building block and it is the capacity of the tile store that is the most significant system parameter. It is therefore desirable to build hand-crafted tile maps using each different tile as often as possible to minimise the total number of unique tiles used.

Photomapped tile maps on the other hand will include whole blocks of unique tiles and will therefore use up the tile store capacity more quickly than hand-crafted tile maps.

The same considerations apply to the construction of macro-maps where in this case the building block is a whole tile map.

Macro-map and tile maps can be regarded as program routines since a macro-map is in effect an array of pointers to members of the next level down - the tile map level, and a tile map is an array of tile pointers, a tile being an array of intensity values.

In the preferred embodiment a pattern processor includes a store structure called the pattern attribute store. The pattern processor receives a pattern code coresponding to the prevailing polygonal surface and it is the job of the pattern attribute store to translate the pattern code into a map number for the macro-map store and tile map store to identify the maps being accessed.

In a preferred embodiment of the invention:

(i) Texture tiles can be used many times over in different tile maps.

(ii) The database for polygonal surface data contains no direct references to physical locations in the tile maps. This allows for dynamic management of the texture memory system.

For the TGU of a preferred embodiment, input consists of geometric information for the surfaces to be textured, and output is a modulation value per pixel to be applied to the basic surface intensity. There are three major functions within the TGU as follows:-

(i) Interfaces - linking the TGU with other means supplying frame and pixel data and pattern data.

(ii) Inverse perspective transformation - computing texture co-ordinates and footprint dimensions for each pixel from each surface's geometric data and the screen co-ordinates.

(iii) Pattern Processing - containing memories and carrying out filtering, interpolation, and blending operations to produce the texture modulation output.

For each frame, all textured surfaces in view have a transformation matrix. During an active display raster period, this data, together with the eyepoint position relative to a reference point is loaded into one half of a double-buffered memory in the TGU. When the display raster goes inactive, the data for the next displayed frame is transferred to the appropriate destinations with in the TGU.

Accessing the correct plane data for the polygonal surface in view on any given pixel is performed using a plane number assigned to each surface.

The main outputs from the TGU are the texture modulaton values, which are used to modulate the surface intensity.

The function of the inverse perspective transformation processor is to produce texture pattern coordinates and pixel footprint information based on the observer's position and attitude relative to the polygonal surface. This is computed using the surface transformation matrix and the screen co-ordinates of the pixel. The matrix is supplied as part of the frame update data. Screen co-ordinates Xs and Ys are generated locally in the TGU using counters controlled by the line and frame sync signals sent by the display circuitry.

The pixel footprint term is calculated for level of detail selection. The footprint approximates to a square with its side equal to the longest dimension given by projection of the pixel into the plane of the polygonal surface.

The invention will now be described in more detail, by way of example, with reference to the accompanying drawings, in which:

Figure 1 is a block schematic diagram of an apparatus embodying the invention,

Figure 2 is a diagram in perspective illustrating geometrical relationships used in processing carried out by the apparatus of Figure 1,

Figure 3 is a block diagram of circuitry for implementing part of the embodiment of Figure 1,

Figure 4 is a block circuit diagram of part of the circuitry of Figure 3,

Figures 5 and 6 are diagrams illustrating memory space organisation in the circuit of Figure 4,

Figure 7 is an illustration of successive subdivision of a photographic image, and

Figure 8 is a set of reproductions of photographic images with increasing degrees of filtering out unwanted detail.

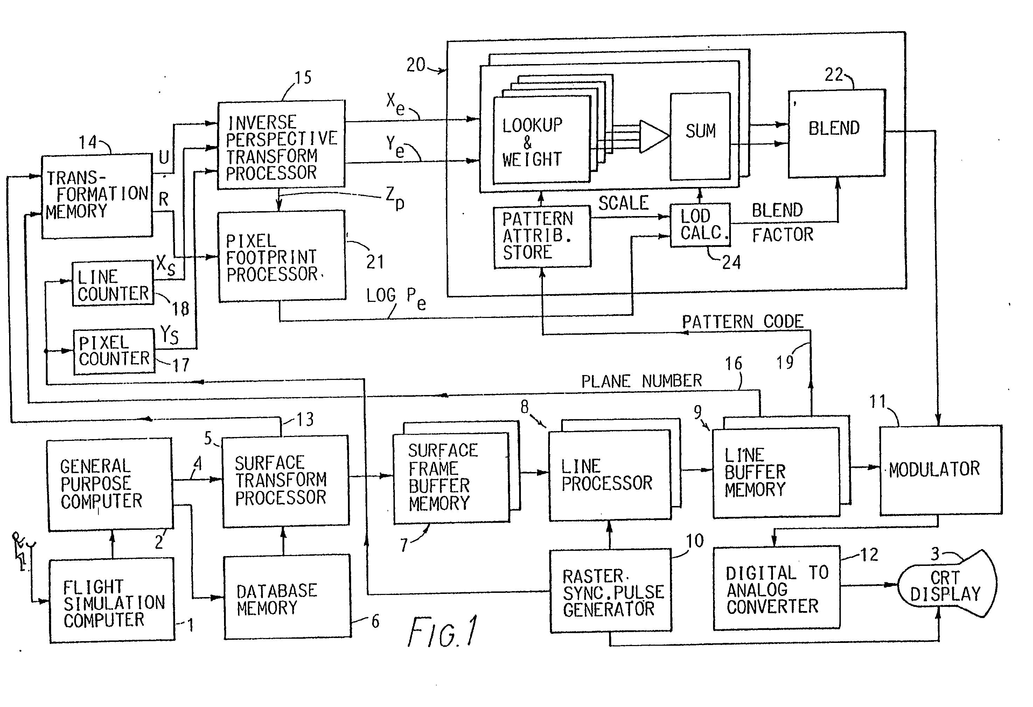

In the Figure 1 of the drawings there is shown in a schematic block diagram a visual display processing system for a flight simulator having a flight simulation computer 1 which serves as the host computer in relation to the visual display processing system.

The flight simulation computer 1 controls an enclosed platform (not shown) on which a trainee pilot is seated. The trainee pilot operates a replica of the controls of a particular aircraft and the computer 1, in response to input signals developed by the replica controls, moves the platform in a manner which to some extent produces the sensation of changes in attitude and movement of the simulated aircraft. The simulation computer 1 also generates data signals representative of the longitude, latitude, altitude and attitude of the aircraft corresponding to the position and attitude of the aircraft, relative to a reference point in a reference plane, which would have resulted from the trainee pilot's operation of the replica controls. These position and attitude signals are supplied to a general purpose computer 2 which is part of the visual display processing system.

The trainee pilot is presented with a visual display of the view associated with the current position and attitude on the screen of a cathode ray tube 3. The display is generated by a raster scan, and for each frame of the display, the general purpose computer 2 generates geometrical transformation matrix data signals 4 which it supplies to a surface transformation processor 5.

A typical simulated flight is a flight from one airport to another. To provide a visual display corresponding to such a flight, the screen of the cathode ray tube 3 must show the pilot's view from take off at the first airport to landing at the second airport. The visual display processing system must be able to show correctly the view determined by any reasonably possible flight path. To limit the requirements, it is typically arranged that the pilot can be presented with a view of the ground features and sky within a 100 mile radius of a reference point, known as the runway threshold, of each airport, the view between the airports outside these limits being restricted to flight above a cloud level, so that only sky and cloud features are then displayed. The geometric data for creating polygon-based displays of the ground features and sky and cloud are held in a database memory 6 in the form of lists of coordinates for polygonal surface vertices, these coordinates being referred to as earth coordinates and being given in three dimensions $X_e$, $Y_e$ and $Z_e$ to allow for display of buildings, other noticeably three dimensional features, and a cloud base. The geometric data for overflown cloud features is also held in the database memory in a similar form. The database memory 5 also holds data assigning a value for the intensity of each polygonal surface defined by a set of vertices, and texture data in the form of a code, referred to as the pattern code, for each defined polygonal surface which indicates the texture effect to be displayed for the defined polygonal surface, and the plane number which identifies the plane in which the defined polygonal surface lies.

The earth coordinates for each airport have as their origin the respective runway threshold. The general purpose computer 2 is therefore arranged to supply to the surface transformation processor 5 a signal indicating the currently applicable earth coordinates orgin, together with the transformation matrix data signals which the processor 5 uses to transform the earth coordinates of each surface vertex read out from the memory 5 within the earth coordinate system addressed into pilot coordinates $X_p$, $Y_p$ and $Z_p$. The pilot coordinate system has the currently computed position of the pilot's eye as its origin and an angular relation to the earth coordinate system determined by the currently computed attitude, i.e. angular disposition, of the aircraft relative to the earth coordinate system. A complete list of sets of stored earth coordinates having as origin the runway threshold indicated by the general purpose computer 2 is transformed by the processor 5 into pilot coordinates. To select from the transformed coordinates those which will be used to determine the view displayed by the cathode ray tube 3, constants determined by the position of the pilot in the aircraft, the area of the window defined by the cathode ray tube 3 and the distance of the pilot's eye from the screen of the tube 3, are used by the processor 5 to reject surface vertices represented by pilot coordinates not falling within the rectangular section pyramid

6

defined by the pilot's eye and the window. The pilot coordinates of the remaining surface vertices are then transformed by the processor 5 into intermediate screen coordinates which have as their origin the centre point of the screen of the cathode ray tube 3.

The pilot coordinates, termed Xp, Yp and Zp, have the Zp axis defined as the line from the pilot's eye through the centre of window and perpendicular to the plane of the window, the Xp coordinate being parallel to the width of the window, and the Yp coordinate being parallel to the height of the window. The screen coordinates, termed Xs and Ys are respectively parallel to the width of the window and parallel to the height of the window, both lying in the plane of the window. The window lies in the plane of the cathode ray tube screen and has the centre of the screen as its centre point. However, to compensate for a delay in the part of the processing system that produces texture signals, the height of the window is chosen to be greater than the height of the screen, the raster lines being scanned vertically.

The matrix data signals 4 generated by the computer 2 include representations of the aircraft position Xo, Yo and Zo in the applicable earth coordinate system, and a rotation matrix [H] which defines the attitude of the aircraft. The processor 6 calculates pilot coordinates Xp, Yp, Zp for each set of earth coordinates Xe, Ye, Ze as follows:

$$
\begin{bmatrix} Xp \\ Zp \\ Yp \end{bmatrix} = [H] \begin{bmatrix} Xe - Xo \\ Ye - Yo \\ Ze - Zo \end{bmatrix}
$$

where [H] is the 3 by 3 matrix defined in United Kingdom patent specification GB 2171579.

To obtain the screen coordinates $X_s$ and $Y_s$, the processor 5 calculates

$$
X_s = \frac{DXp}{Zp} \times \frac{NSL}{W} + \frac{NSL}{2}
$$

and

$$
Y_s = \frac{DYp}{Zp} \times \frac{NPE}{H} + \frac{NPE}{2}
$$

where D is the distance from the origin of the pilot coordinates to the screen along the Zp axis,

NSL is the number of scan lines across the width W of the window,

and NPE is the number of pixels along a raster line equal in length to the height H of the window.

The offset quantities $\frac{NSL}{2}$ and $\frac{NPE}{2}$ are included so that the screen coordinates $X_s$, $Y_s$ are generated having the bottom left hand corner of the window as origin as viewed by the pilot.

Since a simulated flight over three dimensional objects requires the display to show the varying appearance of, for example, buildings standing one behind the other as the aircraft flies past, the database memory 6 holds its lists of geometrical data in an order and format which enables the processor 5 to reject those surfaces which are invisible from the current position of the pilot. This facility, referred to as attributing priorities to surfaces, and its method of implementation are known to those skilled in the art.

From the sets of screen coordinates for surface vertices, the processor 5 generates a list of surface start and surface end points for each raster line. This list, together with the associated surface intensity and texture data, is written into one half of a frame buffer memory 7 for surface data. The other half of the frame buffer memory 7 contains the surface data for the preceding frame which is read by a line processor 8. The processor 8 reads the surface data one raster line at a time and writes intensity and texture information for each pixel into part of a line buffer memory 9. The writing operation by the line processor 8 is synchronised by pulses from a raster sync pulses generator 10 which also controls the timing of the raster line scans of the cathode ray tube 3, the synchronising pulses supplied to the processor 8 being generated at the pixel rate during each line. The line buffer memory 9 is capable of storing more than one line so that an intensity modulator unit 11 can read out a complete line of pixel intensity data while the processor 8 is writing another line into the buffer memory 9.

The intensity modulator unit 11 includes logic circuitry for multiplying pixel intensity values input from the line buffer memory 9 by modulating values input by the texture data generating part of the system. The modulated intensity values are supplied by the modulator unit 11 to a digital to analog converter unit 12 which supplies corresponding analog intensity signals to the cathode ray tube 3.

In the present example, the cathode ray tube 3 provides a monochrome display.

The surface transformation processor 5 supplies geometrical inverse transformation matrix data signals

7

13 to a transformation matrix memory 14, which represent, in the present embodiment, one of two matrices, one matrix being for transforming screen coordinates into earth coordinates in the ground plane where Ze = 0, and the other matrix being for the transforming screen coordinates into earth coordinates in the sky plane, where Ze = Zc, i.e., the height of the cloud base. Which of these two matrices is supplied to a pipelined inverse perspective transformation processor 15 is determined by a plane number signal 16 supplied to the matrix memory 14 by the line buffer memory 9. The database memory 5 includes sky plane geometric feature data associated with one plane number, the ground plane geometric feature data being associated with the other plane number. The transformation matrices required to convert the screen coordinates into earth coordinates are inverse perspective matrices.

The screen coordinates are supplied to the processor 15 by a pixel counter 17 and a line counter 18. These two counters are driven by synchronising pulses supplied by the raster sync pulse generator 10. Each raster line displayed on the screen of the tube 13 contains, for example, 768 pixels. However, the height of the window is 1024 in this case, and it is arranged that only the middle 768 pixels of data from the line buffer memory 9 are displayed on the screen. This allows sufficient time for the processing carried out by the inverse perspective transformation processor 15 and subsequent stages in the generation of texture data up to the intensity modulator 11 to be carried out in relation to the respective pixel intensity value input from the line buffer memory 9 to the intensity modulator unit 11. The first pixel to be displayed in any raster line is pixel number 128. Consequently, the value $Y_s$ = 128 is supplied by the pixel counter 17 to the processor 15 at a time exactly sufficiently in advance of the output of the intensity data for pixel number 128 by the line buffer memory 9 to ensure that the texture modulation applied to that intensity is the correct modulation for pixel number 128. This timing relationship is ensured by the signals supplied by the raster sync pulse generator 10 to the line processor 8 and the pixel counter 17. It is also arranged that the plane number signal 16 and a pattern code signal 19 which are read out from the line buffer memory 9 are those corresponding to pixels sufficiently in advance of the pixel whose intensity is currently being read by the intensity modulator unit 11. The plane number signal 16 and the pattern code signal 19 are representative of the plane numbers and pattern codes read from the database memory 6 and passed on by the processor 5 via the memory 7 and processor 8 to the line buffer memory 9 without alteration.

In addition to storing inverse transformation matrices, the transformation matrix memory 14 also stores a set of values of a constant, R, supplied by the processor 5, there being one value of R for each plane number. The values of R are

$$R = \log_2\frac{Ps}{DZ_o}$$

where $P_s$ is the screen dimension of a pixel measured parallel to the height of the screen,

D is the perpendicular distance from the pilot's eye to the screen,

and Zo is the perpendicular distance from the pilot's eye to the texture plane concerned, i.e., in the present example, to either the ground plane or the sky plane.

The use of the values of R will be explained hereinafter.

The pipelined inverse perspective transformation processor 17 calculates the earth coordinates Xe and Ye corresponding to the pair of screen coordinates $X_s$ and $Y_s$ supplied thereto by the line counter 18 and the pixel counter 17 at every pixel.

In order to create a texture effect in the ground and sky planes, the intensity modulator unit 11 must modulate the pixel intensity data supplied from the line buffer memory 9 by varying the intensity values for pixels within each surface to be textured which lies within either the ground plane or the sky plane. To give a realistic appearance to the display, the present system takes into account the distance of the pilot from the part of the plane viewed, and the angle made between that part and the line of sight.

Modulation values are supplied to the modulator unit 11 by a pattern processor 20 that receives the calculated earth coordinates Xe and Ye from the processor 15 and another input from a procesor 21 called here the pixel footprint processor. Intensity modulation values are stored as sets of values, which sets are referred to hereinafter as tiles, in the pattern processor 20. Each tile contains from one value up to a square array of 16 by 16 values and the number of values in a tile is always a power of 2. The notional area covered in the simulated ground or sky plane by a single texture tile may be used repeatedly to cover a larger area of ground or sky plane displayed.

Each tile is treated in processing as a square area of square elements, the value of the intensity modulation held within any given element being constant. The side of each element represents a length $T_e$ in feet in the earth coordinate system. Only tiles with a value of $T_e$ which is a power of 2 are stored. The power of 2 may be negative, zero, or positive.

To explain the operation of the pixel footprint processor 21, a simple example will be described in which the view presented to the pilot's eye is of a horizontal ground plane uniformly textured, at ground level, up to the horizon. The texture pattern may be grass for example. From the pilot's position, the appearance of the ground plane will be of texture in which the detail diminishes towards the horizon. $P_e$ is the length of one pixel as projected onto the ground plane. The distance from the pilot's eye to the centre of this projection is $\frac{Zp}{\cos\alpha}$ where $\alpha$ is the angle between the Zp axis and the line of sight. If the actual length of a pixel at the screen is $P_s$, the projection $P_n$ perpendicular to the line of sight at the distance $\frac{Zp}{\cos\alpha}$ is given by

$$P_n = \frac{Ps \; Zp \; \cos \alpha}{D \; \cos \alpha}$$

If $\beta$ is the angle between the line of sight and the ground plane,

$$P_e = \frac{Pn}{\sin\beta}$$

The relationship between $\alpha$ and $\beta$ is given by

$$\sin \beta = \frac{Zo \cos \alpha}{Zp}$$

where Zo is the vertical earth coordinate of the pilot's eye.

Hence,

$$P_e = \frac{Ps \; Zp . Zp \; \cos \alpha}{D \; \cos \alpha . Zo \; \cos \alpha}$$

$$= \frac{Ps \; Z^2p}{DZo \cos \alpha}$$

Cos $\alpha$ ranges from 1 at the centre of the screen to 0.878 at the corner, so that its variation is small enought to allow cos $\alpha$ to be treated as constant at 1. The equation used therefore to calculate $P_e$ is:

$$P_e = \frac{Ps \; Z^2p}{DZo}$$

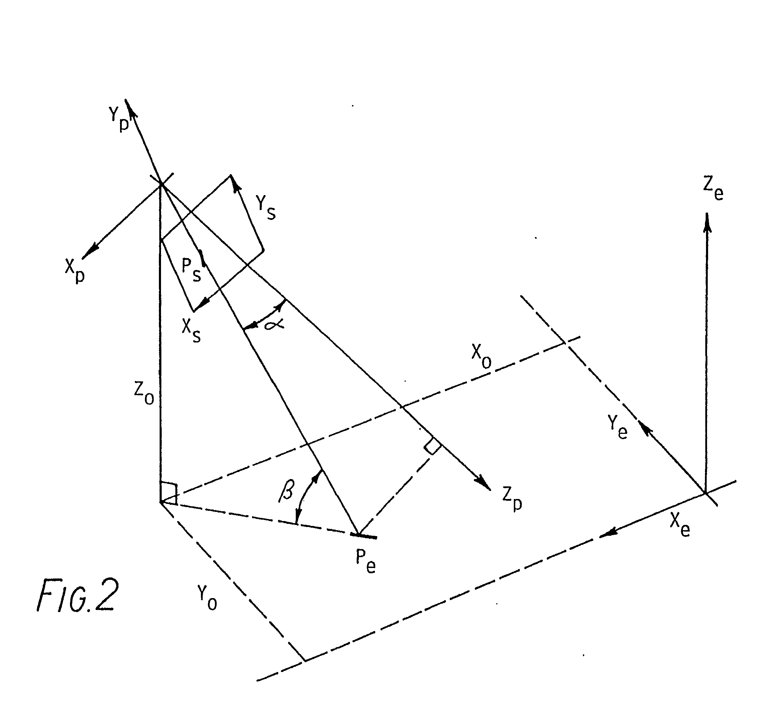

The relationships between the three sets of coordinate axes Xe, Ye and Ze, Xp, Yp, and Zp, and Xs and Ys, the screen pixel length $P_s$, the pixel length projection $P_e$ on the ground plane, the pilot's eye position Xo, Yo, Zo in the ground coordinate system, and the angles $\alpha$ and $\beta$ are illustrated in Fig. 2.

$$\log_2 P_e = 2 \log Zp + [\log_2 (Ps/D) - \log_2 |Zo|]$$

The memory 14 supplies a signal of value

$$R = \log_2 (P_s/D) - \log_2 |Z_o|$$

to the pixel footprint processor 21 for each frame to be displayed.

The pixel footprint signal generated by the processor 21 is represented by

$$\log_2 P_e = R + 2 \log_2 Zp$$

$P_e$ represents a notional texture tile element side length. However, $P_e$ will not usually be equal to the value of $T_e$ for a tile representing the desired texture at the corresponding point in the viewed scene, since only tiles of certain values of $T_e$ are stored. The value of $P_e$ will frequently lie between two adjacent values of $T_e$ for the desired texture. In the present example, the larger of the two values of $T_e$ will be twice the smaller value of $T_e$. If $P_e = \log_2 (N+f)$ where N is an integer and $f < 1$, then the two values of $T_e$ between which $P_e$ lies are $2^N$ and $2^{N+1}$ feet.

The line buffer memory 9 provides one intensity value for each pixel to be displayed on the screen of the CRT display 3, and therefore the pattern processor supplies one modulating value per pixel to the intensity modulator unit 11. The pixel footprint processor 21 supplies one value of $\log_2 P_e$ per pixel to the pattern processor 20 which generates from its stored intensity modulation values two values $I_N$ and $I_{N+1}$ which areadded together in different proportions by a blender circuit 22 to produce the final output intensity modulation value $I_B$ supplied to the intensity modulator unit 11. The addition carried out by the blender circuit 22, which is the output stage of the pattern processor 20, is effected in accordance with the equation

9

$$I_B = I_N (I - f) + I_{N+1} f.$$

$I_N$ and $I_{N+1}$ are values produced by the pattern processor 20 as weighted values derived from values looked up in tiles with $T_e$ values of, respectively, $2^N$ and $2^{N+1}$ feet.

The processor 15 receives $X_s$, $Y_s$ values from the line counter 18 and the pixel counter 17, and for every pixel, produces a pair of Xe, Ye values, and a Zp value.

The values of Xp and Yp corresponding to Xs, Ys are given by

$$X_P = \frac{W.Zp}{D.NSL} \left( Xs - \frac{NSL}{2} \right)$$

$$Y_P = \frac{H.Zp}{D.NPE} \left( Ys - \frac{NPE}{2} \right)$$

The values of Xe, Ye and Ze, are related to the values of Xp, Zp and Yp by

$$\begin{bmatrix} Xe - Xo \\ Ye - Yo \\ Ze - Zo \end{bmatrix} = [H]^{-1} \begin{bmatrix} Xp \\ Zp \\ Yp \end{bmatrix} \quad \ldots\ldots\ldots\ldots\ldots (1)$$

where $[H] [H]^{-1} = [I]$, the identity matrix.

However, [H] is orthogonal, so that $[H]^{-1}$ is the transpose of [H].

Zo is the altitude of the aircraft measured to the pilot's eye, and Ze is the height above ground level of the point (Xe, Ye, Ze). The relationships used for applying texture to the displayed ground plane are obtained by putting $Z_e = 0$ in equation (1). For the sky plane it is necessary to treat the actual ground plane level as the sky plane, and therefore $Z_o$ is replaced by $(-|Z_c|+Z_o|)$, where $Z_c$ is the cloud base height, and $Z_e$ again put to zero, in equation (1).

Planes parallel to the ground plane but situated between the aircraft and the ground plane can also be textured if $Z_o$ is replaced in equation (1) by $Z_o - Z_B$ where $Z_B$ is the height of the plane to be textured above the ground plane, Ze again being put to zero.

From equation (1), for the ground plane,

$$-Z_c = \frac{h_{13}W.Zp}{D.NSL} (Xs - \frac{NSL)}{2} = h_{23}Zp + \frac{h_{33}H.Zp}{D.NPE} (Ys - \frac{NPE)}{2}$$

Hence

$$Zp = \frac{-Z_o}{\dfrac{h_{13}WXs}{D.NSL} + \dfrac{h_{33}HYs}{D.NPE} + h_{23} - \dfrac{h_{13}W}{2D} - \dfrac{h_{33}H}{2D}}$$

It can be shown that

$$\begin{bmatrix} X_t / Zp \\ Y_t / Zp \\ 1 / Zp \end{bmatrix} = [U] \begin{bmatrix} X_s \\ Y_s \\ 1 \end{bmatrix}$$

where $X_t = X_e - X_o$
and $Y_t = Y_e - Y_o$

and [U] is the 3 by 3 matrix defined in GB 2171579.

The elements of [U] are constant for each frame to be displayed, and are supplied to the processor 15 from the matrix memory 14. Xs and Ys are supplied by the line and pixel counters 18 and 17.

The processor 15 calculates

$$[U] \begin{bmatrix} X_s \\ Y_s \\ 1 \end{bmatrix}$$

then the values of $X_t$ and $Y_t$, and finally the values of Xe and Ye, the values of $X_o$ and $Y_o$ being supplied from the matrix memory 14. The value of (1/Zp) is calculated from $1/Zp = U_{31} X_s + U_{32}Y_s + U_{33}$.

For the sky plane, $Z_o$ is replaced by $(-|Z_c| + |Z_o|$ in the equation for Zp, and hence in $U_{31}$, $U_{32}$ and $U_{33}$.

The processor 15 computes $X_e$, $Y_e$ for every pixel along a raster line starting at $Y_s = T$ where T is the delay between the input of the processor 15 and the output of the pattern processor 20.

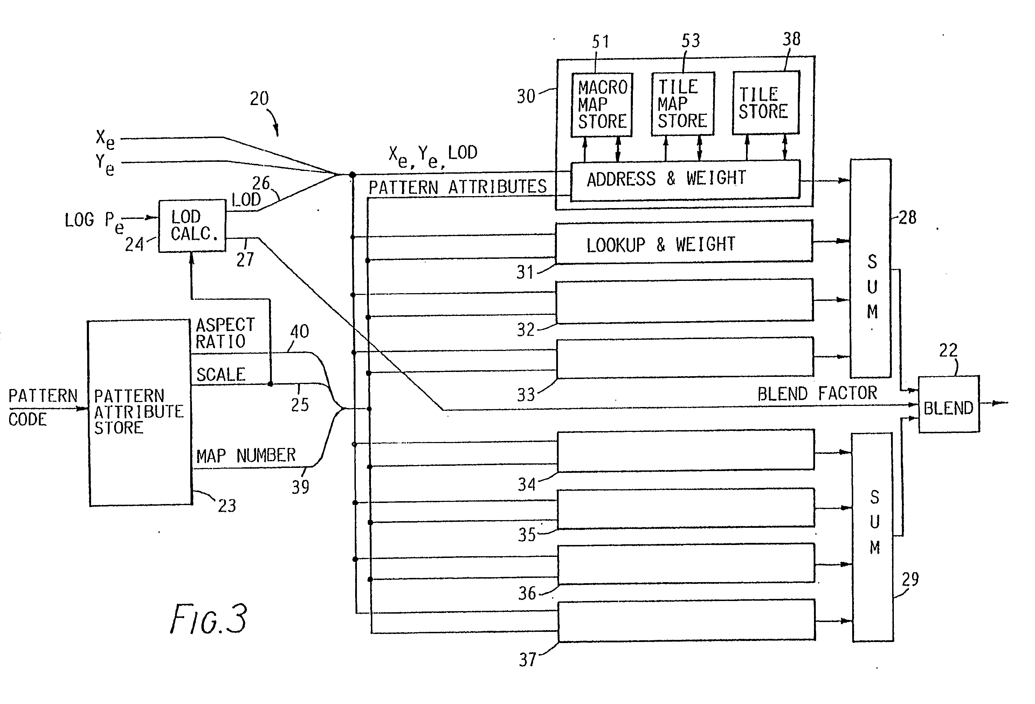

Fig. 3 shows the pattern processor 20 in more detail.

The processor 20 includes, in addition to the blender circuit 22, a pattern attribute store 23 that receives and decodes the pattern code signal 19, an LOD calculator 24 that receives the $\log_2 P_e$ signal from the pixel footprint processor 21 and a scale signal 25 from the pattern attribute store 23 and calculates an LOD signal 26 and a blend factor signal 27, two summing circuits 28 and 29 that supply the weighted values $I_N$ and $I_{N+1}$ to the blender circuit 22, and eight tile storage, addressing and value weighting units 30 to 37, referred to hereinafter as lookup and weight units, arranged as two groups of four supplying the two summing circuits 28 and 29.

Each of the lookup and weight units 30 to 37 stores the same set of tiles, in a respective tile store 38, and receives the $X_e$ and $Y_e$ coordinate values supplied by the inverse perspective transformation processor 15, the LOD signal 26, the scale signal 25, and two other pattern attribute signals, termed the map number 39 and the aspect ratio 40.

The multiplicity of tiles stored in a tile store 28 can be regarded as being organised into a plurality of groups of tiles in which each such group provides all the modulation values needed to produce a particular pattern at a particular resolution over an area corresponding at least to the sum of the areas represented by all the tiles of that group. Each such distinct group is identified, in terms of addressing within the lookup and weight unit, by a tile map pointer.

Any one pattern may be stored in a number of different resolutions. The resolution is the result of the notional distance intended to be present between the centres of adjacent elements of a tile of the pattern, and is therefore higher the shorter this distance is. The notional distance between the centres is equal to $T_e$ for the tile in question.

All tiles of a given pattern represent the same notional area, regardless of their resolution. Tiles of different patterns may represent different notional areas.

The maximum resolution at which patterns are present in the lookup and weight unit is not a fixed degree of resolution in terms of $T_e$. For example, it may be necessary to store some patterns at a maximum resolution given by $T_e = 2^{-4}$ feet, whereas other patterns may be needed with a maximum resolution no more detailed than is given by $T_e = 2^7$ feet. If the value of $T_e$ for the maximum resolution is designated $T_{eMIN}$, then the scale signal 25 represents $\log_2 T_{eMIN}$.

The value of Pe is also the distance between the centres of adjacent projected pixels along an Xe, Ye plane line that is the projection of the screen raster line containing the two pixels. This value will usually not be equal to the notional distance between the centres of adjacent elements of a tile of the pattern required at the region being scanned. Consequently the projected pixel centres will not usually map onto all the tile element centres of a tile. However, since the values of $X_e$ and $Y_e$ supplied by the processor are in binary form, those bits in $X_e$ and $Y_e$ which are of lower significance than the bit position representing the magnitude of $T_e$ in the tile to be addressed are not used in addressing the tile. These lower significance bits are used in a weighting process based on the following geometrical interpolation considerations.

If $(X+\frac{1}{2}, Y+\frac{1}{2})$ are the coordinates, in whole tile elements, of the centre of the bottom left hand one of four tile elements forming a square containing the point $X_e$, $Y_e$, and $(\Delta X, \Delta Y)$ are the coordinates of that point relative to that centre. The coordinates of that point relative to that centre. The coordinates, in tile elements, of the centres of the other three elements are $(X+\frac{1}{2}, Y+1+\frac{1}{2})$, $(X+1+\frac{1}{2}, Y+\frac{1}{2})$, and $(X+1+\frac{1}{2}, Y+1+\frac{1}{2})$.

Let the intensity modulation values at $(X+\frac{1}{2}, Y+\frac{1}{2})$, $(X+\frac{1}{2}, Y+1+\frac{1}{2})$, $(X+1+\frac{1}{2}, Y+\frac{1}{2})$ and $(X+1+\frac{1}{2}, Y+1+\frac{1}{2})$ be respectively, A, C, B and D.

The $X_e$, $Y_e$ coordinates of the point are processed as coordinates $(X+\Delta X+\frac{1}{2})$ and $(Y+\Delta Y+\frac{1}{2})$ in units of $T_e$.

The interpolation algorithm uses the values $\Delta X$ and $\Delta Y$. These are obtained by subtracting 0.5 from the fractional part of the $(X+\Delta X+\frac{1}{2})$, $(Y+\Delta Y+\frac{1}{2})$ coordinates and then taking the fractional part of the result. This is done in 2's complement format so that the fractional part always has a positive value less than 1. The algorithm involves interpolating first in the X axis and then in the Y axis. X axis interpolation interpolates between A and B to give a value J and between C and D to give a value K. Y axis interpolation then interpolates between J and K to give the final interpolated modulation value T at the projected pixel centre point.

X axis interpolation:

$$J = (1-\Delta X)A + (\Delta X)B$$
$$K = (1-\Delta X)C + (\Delta Y)D$$

Y axis interpolation:

$$T = (1-\Delta Y)J + (\Delta Y)K$$

In this particular implementation these equations are rearranged so that a net weighting factor can be applied to each element separately before final summation as follows:

$$T = (1-\Delta X)(1-\Delta Y)A + (\Delta X)(1-\Delta Y)B + (1-\Delta X)(\Delta Y)C + (\Delta X)(\Delta Y)D$$

To implement the interpolation algorithm, the four adjacent values A, B, C, and D must be read out for each value of $X_e$, $Y_e$. The lookup and weight units 30 to 33 read out respectively A, B, C and D, and the summing circuit 28 carries out the final addition to produce T, which in this case is $I_N$. Similarly, the lookup and weight units 34 to 37 read out respectively A, B, C, and D of a lower resolution tile of the same pattern, and the summing circuit 29 carries out addition to produce its value of T which is $I_{N+1}$.

The scale signal 25, decoded at the attribute store 23 from the pattern code, and the LOD signal 26 from the calculator 24 determine the values of $T_e$ required by the addressing circuitry of the units 30 to 37.

The LOD calculator 24 calculates the value of $\log_2 T_e$ for the resolution which the pixel footprint $P_e$ will fit. The LOD signal 26 thus provides the power of two that relates the scale signal value of $T_{eMIN}$ to the pixel footprint value $P_e$.

Since $P_e = 2^{(N+f)}$ feet, then $P_e = (T_{eMIN})(2^{n+f})$

where n is zero or a positive or negative integer.

If $N = m+n$ where m is the scale signal value, then $\log_2 P_e = (m+n+f)$.

When n is zero or a positive integer, the LOD signal 26 represents n and is supplied to all the lookup and weight units 30 to 37. In the units 30 to 33, the LOD signal 26 is treated as representing n, whereas in the units 34 to 37 it is treated as representing n+1, which becomes the effective LOD value in those four units. As a result, the tiles addressed in the units 30 to 33 are tiles having elements of length $2^N$ feet, whereas the tiles addressed in the units 34 to 37 are tiles having elements of length $2^{(N+1)}$ feet.

When n is a negative integer, the LOD signal 26 is given the value zero, and the LOD signal 26 is treated as representing zero in the units 30 to 33, and 1 in the units 34 to 37.

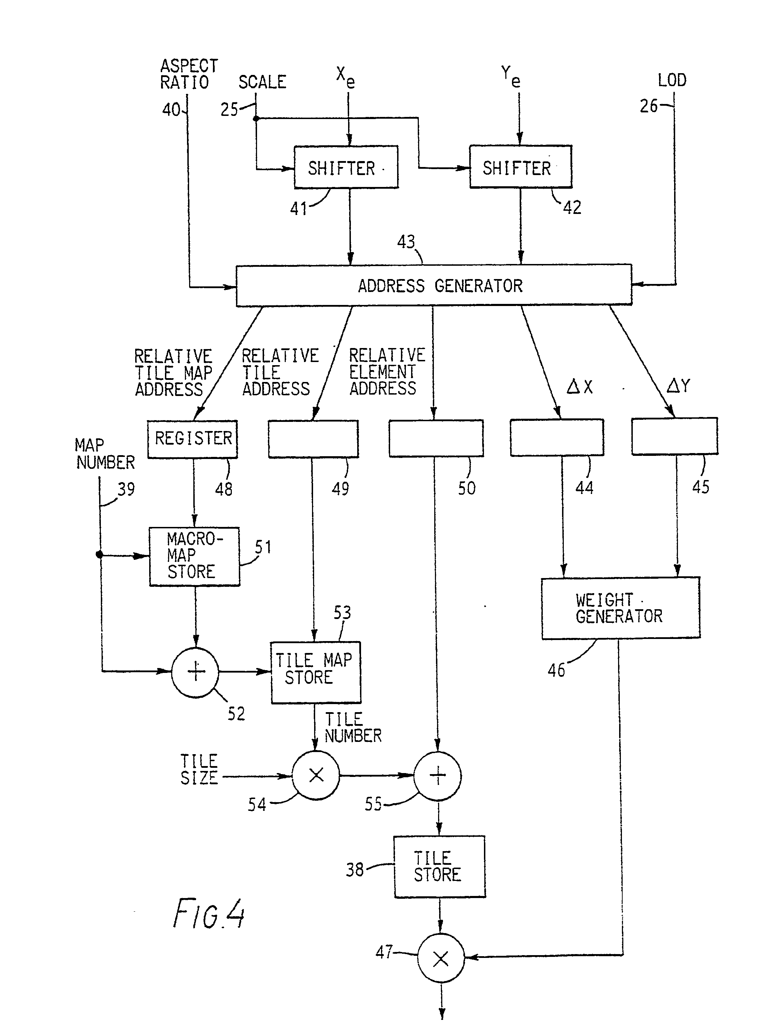

Fig. 4 is a schematic block diagram of any one of the units 30 to 37.

The coordinate values $X_e$ and $Y_e$ are supplied to respective shifters 41 and 41 where each coordinate value is shifted so as to cause in each value the bit corresponding to $T_{eMIN}$ to become the bit signifying $2^0$ at the output of the shifter. This operation is carried out with the use of the scale signal 25 which is supplied to the shifters 41 and 42. The outputs from the shifters are referred to as scaled outputs. The number of bits in each scaled output is (s+r+1) where r is the precision to which interpolation is carried out, and (s+1) is the number of bits needed to form one address coordinate to an intensity modulation value at a position along one side of a macro map at the highest resolution and having an aspect ratio of unity. The nature of a macro map will be made clear hereinafter. The scaled outputs are supplied to an address generator 43 that also receives the LOD signal 26 and the aspect ratio signal 40. The value n of the LOD signal 26 is used to determine further shifting which results in the bit corresponding to $2^n$ in each scaled output being treated as signifying $2^0$. All the bits below this newly designated $2^0$ are separated from the bits of higher significance, i.e. $2^0$ and above, $2^{-1}$ is subtracted and the remaining bits become $\Delta X$ or $\Delta Y$, which are loaded into respective registers 44 and 45. From these registers 44 and 45 the values of $\Delta X$ and $\Delta Y$ are read to a weight generator 46 which calculates the appropriate one of the four expressions $(1-\Delta X)(1-\Delta Y)$, $(\Delta X)(1-\Delta Y)$, $(1-\Delta X)(\Delta Y)$, and $(\Delta X)(\Delta Y)$ depending upon whether the unit is unit 30 or 31 or 32 or 33, or unit 34 or 35 or 36 or 37. The result of this calculation is supplied by the weight generator 46 to a digital multiplier 47 that multiplies the intensity modulation value A or B or C or D, read out from the tile store 38, by the result from the generator 46. The output of the multiplier 47 is supplied to the summing circuit 28 or 29.

The aspect ratio signal 40 supplied to the address generator 43 determines the apportionment of higher significance bits in the macro map address coordinates and has no effect on the integer part of the coordinates $(X+\Delta X+\frac{1}{2})$ and $(Y+\Delta Y+\frac{1}{2})$ and will be described hereinafter. The values of the two scaled outputs, after processing in the address generator 43 in accordance with the aspect ratio and LOD signals 40 and 26 provide three groups of bits: a relative tile map address, a relative tile address, and a relative element address. These three addresses are loaded into respective registers 48 and 49, and 50.

The map number 39 and the relative tile map address read from the register 48 are combined at a macro-pattern store 51 to form an address to an offset value in the store 51. The offset value is read out and is then combined with the map number 39 at a summing circuit 52 which supplies the sum of the map number and the offset value to a tile map store 53. At the tile map store 53, the output sum from the summing circuit 52 is combined with the relative tile address read out from the register 49 to form an address to a tile number. The addressed tile number is read out and multiplied at a digital multiplier circuit 54 by a tile size which is a constant that converts the tile number into a suitably scaled value for use in addressing the tile store 38 in units of tile elements. The size scaled tile number is added to the relative element address read out from the register 50 and the sum is supplied by a summing circuit 55 to the tile store 38 as a complete address to a particular tile element. The value of the addressed tile element is supplied to the multiplier 47.

The tile numbers stored in the tile map store 53 are pointers to respective tiles in the tile store 38.

By storing a pointer to the same tile at a plurality of addresses in the tile map store 53, it is possible to arrange for one tile to be used repeatedly over an area corresponding to those addresses to the tile map store 53.

The output from the summing circuit 52 is a pointer to a particular set of tile pointers stored in the tile map store 53. The relative tile address read from the register 49 is an offset pointer to a particular tile pointer within any such set, so that the combination of the output from the circuit 52 and the relative tile address addresses a particular tile pointer within a particular set of tile pointers. The sets of tile pointers identified by the outputs from the summing circuit 52 are called tile maps.

If the offset value read out from the macro-map store 51 remains the same value for all the possible values of the relative tile map address while a particular map number 39 is applied, only one tile map in the tile map store 53 is addressed by the relative tile addresses applied throughout the presence of that particular map number 39.

Each polygonal surface defined by the data in the database memory 6 has an associated single map number. Hence if this map number is one for which the macro-map store 51 provides the same offset value for every relative tile map address value, then the texture pattern produced by the corresponding tile map in the tile map store 53 is applied one or more times to the area in the $X_e$, $Y_e$ plane corresponding to the respective polygonal area. The resolution of the texture pattern applied can vary with the magnitude of $P_e$ in the direction along lines parallel to the projection of the $Z_P$ axis onto the $X_e$, $Y_e$ plane, since the value of the LOD signal 26 is used in determining the relative tile map address output by the address generator 43 to the macro map store 51 through the register 48.

Alternatively, at a particular map number 39, the macro-map store 51 can contain sets of offset values which add in the summing circuit 52 to the map number to form a set of pointers to a variety of tile maps. Some of the these pointers may all point to a single tile map. For each such map number 39, each relative tile map address read out from the register 48 provides the address to a particular offset value in the set which is specified by the map number 39. The resolution can vary as just explained.

A set of pointers which is thus associated with a single map number is called a macro map and consists of one or more subsets of pointers, each subset consisting of those pointers which point to tile map(s) of equal resolution. As will be explained hereinafter, the subsets need not contain equal numbers of pointers.

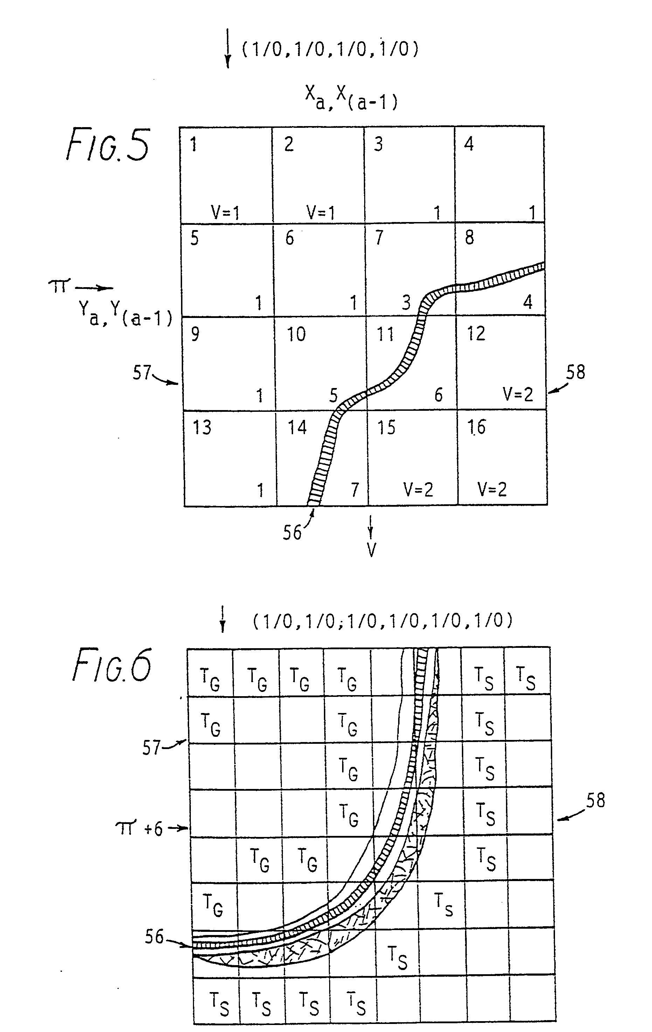

Fig. 5 is a simple graphical representation of a memory space in the macro-map store 51 corresponding to one resolution of one macro-map. The macro-map is addressed when the map number 39 is $\pi$. It is assumed that the relative tile map address has four bits (1/0, 1/0, 1/0, 1/0), so that the area in the cartesian coordinate plane that corresponds to the macro-map is defined by two bits $X_a$, $X_{(a-1)}$ in the X dimension, and two bits $Y_a$, $Y_{(a-1)}$ in the Y dimension. The individual positions of offset values V are numbered 1 to 16 accordingly. The macro-map provides the highest level of addressing to an area in which part of a boundary 56 between land 57 and sea 58 is to be represented. The land 57 is to be represented as a uniform area of grass. Consequently all those pointers ($\pi$+v) from addresses corresponding wholly to grass can be identical. It is assumed that ($\pi$+1) points to a tile map representative of grass. Similarly all those pointers ($\pi$+v) from addresses corresponding wholly to sea can be identical and are assumed in this example to be ($\pi$+2). The pointers for addresses indicated in Fig. 5 by squares 7, 8, 10, 11, and 14 are all different and point to tile maps specially designed to reproduce the required features. The tile map for the pointer ($\pi$+6) from square 11 is represented as an example in Fig. 6 where it is assumed that the relative tile address has six bits formed from three bits of one coordinate and three bits of the other coordinate. This tile map consists of a square array of 64 tile numbers. However, since many of the tile numbers for the land area 57 can be the same, $T_G$, ie the number of a tile giving a grass texture appearance, and similarly many others will be the number $T_s$ of a tile that gives a sea texture appearance, the total number of different tile numbers is less than sixtyfour. Where the boundary 56 passes at least in part through the area of a tile number, the corresponding tile in the tile store 38 must provide a texture effect giving the appearance of the detail of the boundary 56, which might be for example a railway line alongside a coastal road running along a cliff top.

A macro-map provides the highest level of pointers to modulation values for the whole area of a polygonal surface defined by data in the database memory 6. However, it should be noted that in many cases, such as the example just described with reference to Figs. 5 and 6, it is not necessary to store in the tile store 38 a number of tiles sufficient to cover the whole area of the polygonal surface. Instead, areas over which a texture is uniform can be covered by repeated reading of a single tile, or a small group of tiles, which will provide the required uniform texture. It is necessary of course to store tiles representative of uniform textures at a sufficient number of different resolutions to allow the expected variation in $P_e$ to be accommodated. The tile map store 53 and the macro-map store 51, and their accompanying addressing mechanisms, thus can provide two levels of economy in the memory space required for the tile store 38.

If the polygonal surface defined by data in the data base memory 6 is larger than the area defined by the full range of relative tile map addresses for a single LOD value, relative tile map addresses are repeated over the area corresponding to the polygonal surface at points with equal values of distance along line of sight.

If desired, other embodiments may include further pointer or offset value storage and addressing means to allow macro-maps to be treated as are tile maps in the embodiment shown, and so on to larger and larger scale combinations.

Although tile maps may be a square array of tile numbers as in Fig. 6, tile maps of other aspect ratio may be stored, some being strip like, having an aspect ratio of say 1 to 16. Since the aspect ratio of the tile map corresponds to the aspect ratio of the corresponding area in the coordinate plane, it is necessary to supply the aspect ratio to the address generator 43 to be used in determining the correction selection of bits from the scaled outputs from the shifters 41 and 42 for use in forming the relative tile map address and the relative tile address. Where a map number 39 is associated with tile maps of a particular aspect ratio, the corresponding macro-map has the same aspect ratio.

The aspect ratio is encoded by the aspect ratio signal 40 which is decoded from the pattern code supplied to the pattern attribute store 23.

Macro-maps, tile maps and the associated tiles can be generated from models created by hand and suitably subdivided, or from photographs. Pictures may be obtained from aerial or satelite photographic sources, and can be digitised using an appropriate scanner or similar equipment. The photographic images provided by aerial survey type photographs can often contain large areas where there is little variation of detail in the image. An example would be an aerial photograph of a rural area with a number of fields marked out by a pattern of hedge rows and roads whereas the areas in between are highly coherent and have a low information content. Where a photograph is used as the source of tile, tile map and macro-map data, the area of the required plane, such as the ground plane, visible in the photograph, which is to provide the data is subdivided by a regular rectangular grid into a number of equal tile map areas, which are again subdivided into equal tile areas. By inspection, areas in the photograph in which there is no detail needed other than texture to indicate the type of surface, for example a grassed area, are identified to be treated as areas of uniform texture, such as the areas 57 and 58 in Figs. 5 and 6. The information contents of tile areas which fall within an area of high coherency are compared, and a set of similar tile areas is found. For such a set, a single new tile is generated, by software program or manual means, which is representative of all the member tiles of the set, and each member tile is replaced by this new tile. The result of using the new tile repeatedly is different from the original area of photographic detail in that it contains less spatial variability, but it still retains enough detail to be effective in a flight simulator visual system.

A tile which will be used repeatedly to generate a representation of a uniform texture area can thus be generated by selection of a single representative tile from digitisation of the uniform area of the photograph. Tiles and tile maps for producing varied detail, such as those containing portions of the boundary 56 in Figs. 5 and 6, are generated directly from the photograpt by suitable digitisation techniques. Usually several tiles of different resolutions will be produced from each tile area.

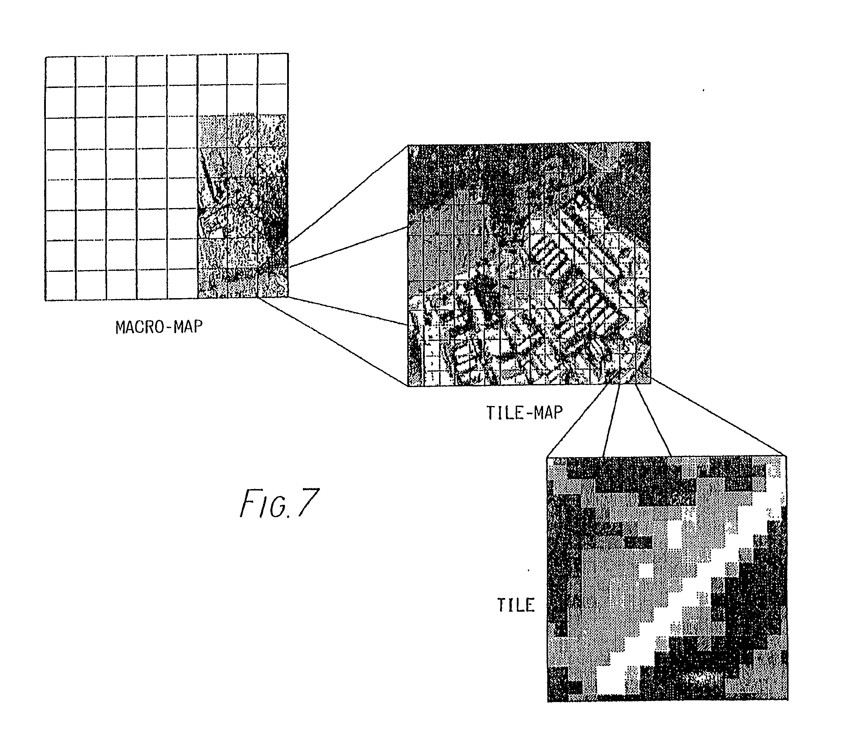

Fig. 7 illustrates the relations between a photograph 59 treated as the area of a macro-map, one 60 of its sixty-four sub-divisions to be treated as a tile map, and one 61 of the 256 tile areas into which the tile map sub-division 60 is divided, with the intensity levels shown quantised to values which are uniform over areas which correspond to tile elements for the maximum resolution to be used in this example.

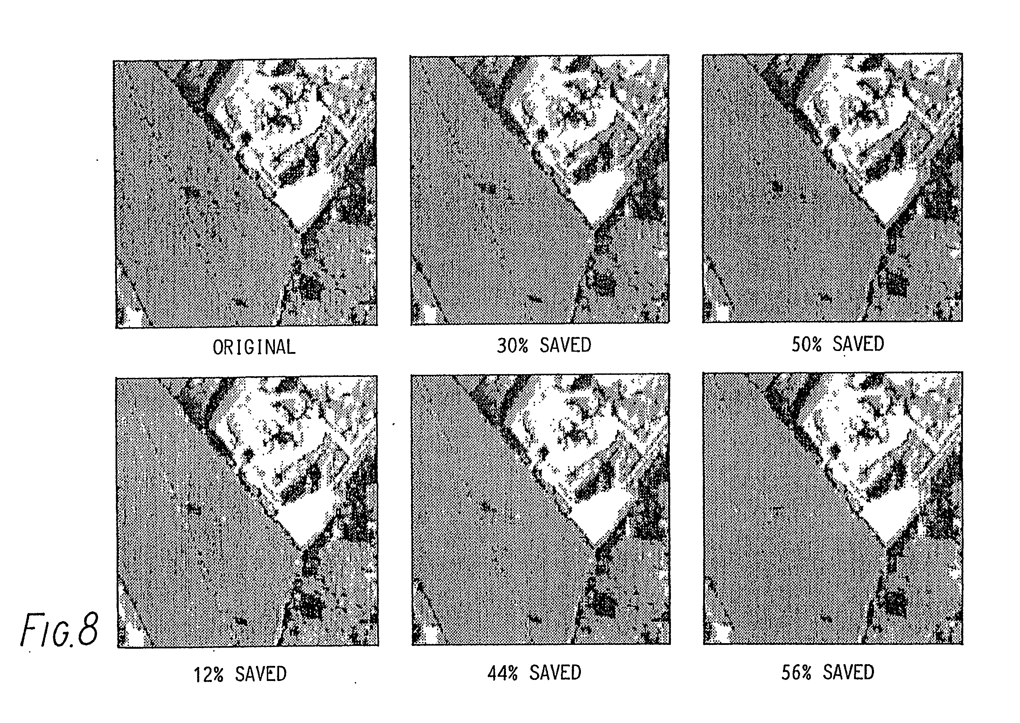

Fig. 8 illustrates an original photograph 62, and five reproductions 63 to 67 in which the amount of memory space saved by treating selected areas as of uniform texture is respectively 12%, 30%, 44%, 50%, and 56% of the amount needed to store digitally the intensity data of the original 62.

In many cases it may not be necessary to provide equally high levels of maximum resolution for all regions of an area providing a macro map. For example, knowledge of the intended training exercise can be used to ensure that only a minimum of photographic detail is stored in an embodiment of the invention. In the case of a photograph of a commercial airport approach, greater maximum possible resolution will be required near and within the airfield, and simulated approach paths may be so structured as to maintain optimum detail along their length when they conform to normal flight paths. For a section of an approach into the airport, an aerial photograph of the final mile of flight towards a runway threshold at the top of the photograph is divided into square areas which are to have different highest levels of stored resolutions. Each square provides the stored section of the photographic detail that would provide the range of maximum to minimum displayed resolution needed on a normal flightpath using a typical airline visual system. The maximum resolution needed along the approach path during a normal approach is determined by the altitude of an aircraft, and perpendicular to the approach path by the distance from each square to the aircraft. This structure would extend out from the area below the approach path with larger squares, their size increasing with distance from the runway. Separate rectangular surfaces overlaid upon each other are used to define these differing maximum levels of resolution of photographic detail. The smallest areas lie around the runway touchdown point lie on a first surface and provide the highest maximum resolution of 6 inches per tile element. Moving down from the runway the squares are enlarged as the maximum resolution is decreased to 1 ft. on a second surface, 2 ft. on a third surface, and so on.

Complete squares may only be replicated where no specific detail of importance would be obscured. Squares containing for example a large road running diagonally across the area must retain the road detail. In a square that contains a section of the road with a grass area above and trees below, the grass and trees have a continuous textured nature which allows a replication of many of the smaller areas and a corresponding memory saving.

Only enough detail from the original photograph is stored to be representative of the scene, so that memory is conserved, and more patterns may be fitted into a given memory size.

By using area replication at the two levels, macro map and tile map, of storage, a considerable memory saving can be achieved, thus allowing large areas to be modelled. To represent areas further away from an airfield complete areas of generic photomap may be used where specific detail is not required.

A number of image processing operations for filtering, cutting and shaping of photographic images are required to construct large geographical areas of photographic detail.

Data can be loaded into the stores 51, 53, and 38 from the flight simulation computer 1 or the general purpose computer 2 over a data bus (not shown) for each runway threshold or other reference point, as will be apparent to those skilled in the art to whom it will also be obvious that by having three pattern processors and making other obvious modifications, full colour visual display can be provided.

## Claims

1.  Apparatus for generating a visual display, comprising first memory means (6) storing geometrical surface data and associated surface appearance data including surface intensity data, first processing means (2, 5) arranged to select from the data stored in the first memory means (6) geometrical surface data and the associated surface appearance data for creating a display of a restricted two-dimensional perspective view of a region defined by observation point and attitude data supplied to the first processing means (2, 5), the first processing means (2, 5) including input means for receiving variable observation point and attitude data, display means (3) coupled to the first processing means (2, 5) for displaying the said restricted perspective view, second memory means (38) storing surface detail data representing at least one planar pattern, the surface detail data comprising a plurality of intensity modulation values each stored at respective address, second processing means (15) coupled to the first processing means (2, 5) to receive observation point and attitude data and to means (10, 17, 18) for generating and supplying thereto pairs of display coordinates corresponding to points in the visual display, the second processing means (15) being such as to generate for each pair of display coordinates supplied thereto a corresponding pair of plane coordinates substantially determined by an inverse perspective projection from the observaton point to a plane defined in the coordinate system of the said geometrical surface data, addressing means (43, 51, 52) coupling the second processing means (15) to the second memory means (38) so as to convert each said corresponding pair of plane coordinates into at least one respective address and to address the second memory means (38) therewith, and intensity modulation means (11) so coupling the second memory means (38) to the display means (3) as to cause the intensity data selected by the first processing means (2, 5) for a displayed point to be modulated by an intensity modulation value obtained from the second memory means (38) for the same displayed point, the said addressing means (43, 51, 52) including at least one store (53) coupled to receive pattern data from the first memory means (6) and containing address data for addressing groups of the said surface detail data in predetermined sequences, and being such that each predetermined sequence is enabled by respective pattern data.

2. Apparatus according to claim 1, wherein the addressing means includes a second store (51) coupled to receive the pattern data, the second store (51) containing address data for addressing groups of the said address data stored in the said one store (53), such addressing being in predetermined sequences and being such that each predetermined addressing in sequence of groups of the said address data in the said one store (53) is enabled by respective pattern data.

3. Apparatus according to claim 1 or 2, wherein the addressing means includes decoding means (41, 42, 43) coupling the second processing means (15) to the at least one store (51, 53) and the second memory means (38), the decoding means (41, 42, 43) decoding the said pairs of plane coordinates into respective addressing signals for the said groups.

4. Apparatus according to any preceding claim, wherein the surface detail data stored in the second memory means (38) represents at least one planar pattern at a plurality of levels of detail, the second processing means includes means (21) for generating a signal representative of a measure of minimum spacing in the pattern plane at which a difference in appearance can be represented by the display means (3), and to supply the said signal to the said addressing means so as to restrict the addressing of the second memory means (38).

5. Apparatus according to any preceding claim, wherein some of the said surface detail data and address data is derived by digitisation of a photographic image.

6. Apparatus for generating a visual display, substantially as described hereinbefore with reference to the accompanying drawings.

FIG.1

FIG.2

FIG.3

EP 0 450 978 A2

FIG.4

$\downarrow$ (1/0, 1/0, 1/0, 1/0)

$X_a, X_{(a-1)}$

*FIG.5*

| 1 | 2 | 3 | 4 |
|---|---|---|---|
| V=1 | V=1 | 1 | 1 |
| 5 | 6 | 7 | 8 |
| 1 | 1 | 3 | 4 |
| 9 | 10 | 11 | 12 |
| 1 | 5 | 6 | V=2 |
| 13 | 14 | 15 | 16 |
| 1 | 7 | V=2 | V=2 |

$\pi \rightarrow$

$Y_a, Y_{(a-1)}$

57 →

← 58

56

↓ V

$\downarrow$ (1/0, 1/0; 1/0, 1/0, 1/0, 1/0)

*FIG.6*

| $T_G$ | $T_G$ | $T_G$ | $T_G$ | | | $T_S$ | $T_S$ |
|---|---|---|---|---|---|---|---|
| $T_G$ | | | $T_G$ | | | $T_S$ | |
| | | | $T_G$ | | | $T_S$ | |
| | | | $T_G$ | | | $T_S$ | |
| | $T_G$ | $T_G$ | | | | $T_S$ | |
| $T_G$ | | | | | $T_S$ | | |
| | | | | $T_S$ | | | |
| $T_S$ | $T_S$ | $T_S$ | $T_S$ | | | | |

57 →

$\pi$ +6 →

← 58

56 →

21

TILE-MAP

TILE

MACRO-MAP

FIG.7

ORIGINAL    30% SAVED    50% SAVED

12% SAVED    44% SAVED    56% SAVED

FIG.8

EP 0 450 978 A2